# EUROPÄISCHE PATENTSCHRIFT

(11) **EP 2 252 821 B1**
(45) Veröffentlichungstag und Bekanntmachung des Hinweises auf die Patenterteilung: **02.11.2011**
(21) Anmeldenummer: 09711504.2
(22) Anmeldetag: 13.01.2009
(51) Int. Cl.: F16L 11/08, F16L 11/04

(54) **FLEXIBLER SCHLAUCH FÜR HOHE DRÜCKE UND TEMPERATUREN, INSBESONDERE LADELUFT- ODER KÜHLWASSERSCHLAUCH**
FLEXIBLE HOSE FOR HIGH PRESSURES AND TEMPERATURES, IN PARTICULAR CHARGE AIR OR COOLING WATER HOSE
TUYAU SOUPLE POUR PRESSIONS ET TEMPERATURES ELEVEES, EN PARTICULIER TUYAU SOUPLE D'AIR DE CHARGE OU TUYAU SOUPLE D'EAU DE REFROIDISSEMENT

(30) Priorität: 15.02.2008 DE 102008009598; 05.12.2008 DE 102008055480
(43) Veröffentlichungstag der Anmeldung: 24.11.2010
(73) Patentinhaber: ContiTech MGW GmbH, 34346 Hannoversch-Münden (DE)
(72) Erfinder: LUDWIG, Ligia, 34119 Kassel (DE); WILL, Gerhard, 34346 Hannoversch-Münden (DE); DILL, Robert, 37081 Göttingen (DE)
(86) Internationale Anmeldenummer: PCT/EP2009/050297
(87) Internationale Veröffentlichungsnummer: WO 2009/100960

(56) Entgegenhaltungen:
- EP-A- 0 490 568
- DE-U1-202004 014 284
- US-A- 5 077 108
- US-A- 5 683 773
- US-A1- 2006 223 399

## Beschreibung

Die Erfindung betrifft einen flexiblen Schlauch für hohe Drücke und Temperaturen gemäß Oberbegriff des Patentanspruchs 1.

Ladeluftschläuche dienen zur Verbindung von Turbolader zu Ladeluftkühler (heiße Seite) und zur Verbindung von Ladeluftkühler zum Motor (kalte Seite). Beide Seiten müssen sowohl Drücken bis zu 3 bar Überdruck widerstehen als auch die Relativbewegung zwischen Motor und Ladeluftkühler ausgleichen.

Es sind Ladeluftschläuche für Ladeluftleitungen und auch Kühlwasserschläuche für Kühlwasserleitungen bekannt, die jeweils eine extrudierte elastomere Innenschicht aufweisen, auf die ein schlauchförmiges Gestrick (Schlauchgestrick) oder ein schlauchförmiges Geflecht (Schlauchgeflecht) aufgestrickt bzw. aufgeflochten ist. Darauf ist eine Außenschicht aus elastomerem Werkstoff aufextrudiert. Die extrudierte Innenschicht kann aus einer oder mehreren Einzelschichten bestehen. Derartige Schläuche sind flexibel und druckbeständig bis ca. 3 bar Überdruck.

Um eine höhere Druckbeständigkeit zu erreichen, ist versucht worden, zwischen dem Rundgestrick oder Rundgeflecht und der extrudierten Außenschicht eine Elastomer-Zwischenschicht und eine weitere Schicht aus einem Rundgestrick oder Rundgeflecht anzuordnen. Die höhere Druckbeständigkeit war zwar zufriedenstellend, die Herstellung komplizierter Schlauchkrümmergeometrien war aber sehr schwierig, weil die erhöhte Steifigkeit eines derartigen Schlauches kleine Radien der Schlauchbögen und eine große Aufweitung der Schlauchenden begrenzte.

Weiter sind sogenannte gewickelte Schläuche bekannt, die aus einer oder mehreren Wickellagen aufgebaut sind. Die Wickellagen bestehen aus ein- oder beidseitig mit einem elastomeren Werkstoff beschichtetem Gewebe oder Gewirke. Diese gewickelten Schläuche sind hochdruckbeständig, jedoch in der weiteren Verarbeitung schwierig, da bei einer wachsenden Anzahl von Wickellagen Schläuche mit aufgeweiteten Enden zur Komplettierung mit Armaturen und Schläuche mit komplizierten Krümmergeometrien aufgrund der steigenden Steifigkeit schwer herstellbar sind.

Aus der DE 20 2004 018 301 U1 ist ein flexibler Schlauch bekannt, der in einer elastomeren Wandung einen eingebetteten Druckträger aufweist, der wenigstens ein im Wesentlichen faden- oder drahtförmiges Druckträgerelement enthält. Dieser Druckträger wird auf die zuerst extrudierte elastomere Innenschicht aufgestrickt. Nachfolgend wird eine elastomere Außenschicht aufextrudiert. Dieser flexible Schlauch ist zwar flexibel, aber wenig druckbeständig.

Aus der EP 1 013 979 A2 ist ein Ladeluftschlauch bekannt, der mit einem mindestens eine Gewebelage umfassenden Druckträger ausgestattet ist. Der Druckträger ist gummibeschichtet und ist auf einen Hilfsdorn aufgewickelt, bevor er der eigentlichen Vulkanisation zugeführt wird. Dieser gewickelte Schlauch ist aufgrund der mehrfachen Wickellagen zu steif und schwierig in gekrümmte Geometrien zu formen.

Aus den US 2006/0223399 A1 und US 5,077,108 sind weitere gattungsgemäße Schläuche bekannt.

Für die neu konzipierten, hoch aufgeladenen Motoren werden Schläuche benötigt, die hohe Anforderungen hinsichtlich der Flexibilität erfüllen, jedoch auch für hohe Überdrücke (größer als 3 bar) geeignet sind. Durch die in der Automobilindustrie anhaltenden Entwicklungen von immer kleineren Motoren mit immer größeren Leistungen pro Liter Hubraum ergeben sich immer höhere Ladeluftdrücke, folglich werden neue Schlauchsysteme für diese Drücke bei gleichbleibender Flexibilität gefordert.

Bisherige Schläuche sind schwerpunktmäßig entweder flexibel oder genügend druckbeständig, aber nicht beides zusammen.

Der Erfindung liegt die Aufgabe zugrunde, einen Ladeluftschlauch der eingangs beschriebenen Art derart auszugestalten, dass er einerseits flexibel ist zur Herstellung verschiedener Krümmungsgeometrien und andererseits aber auch druckbeständig ist für die hohen Druckbeanspruchungen aufgrund der neuen Motorenentwicklungen.

Die Erfindung wird dadurch gelöst, dass auf der elastomeren Innenschicht eine textile Festigkeitsträgereinlage aus einem umfangsmäßig geschlossenen, schlauchförmigen Gestrick oder Geflecht aufgebracht ist, auf dem als weitere textile Festigkeitsträgereinlage eine beidseitig gummierte Textillage aufgewickelt ist.

Der Ladeluftschlauch weist ein schlauchförmiges Gestrick oder Geflecht auf einer inneren Elastomerlage auf. Darum ist eine beidseitig gummierte Textillage mit einer oder mehreren Windungen aufgewickelt. Die Textillage ist beidseitig gummiert, um eine haftende Verbindung mit dem Schlauchgestrick oder dem Schlauchgeflecht und den weiteren Umschlingungen der Wickellage der Textillage zu bewirken.

Die Kombination von schlauchförmigem Gestrick oder Geflecht und der Wickellage aus einer Textillage bewirkt eine begrenzte radiale Expansion des Schlauches, welches ein maßgeblicher Faktor für eine lange Lebensdauer unter Druckbelastung ist, bei vergleichsweise guter Flexibilität in axialer Richtung. Bei einer Überlagerung von Dehnung des Schlauches unter Druckbelastung und mechanischen Zwangsbewegungen in Verbindung mit Temperatureinfluss kommt es durch die erfindungsgemäße Ausbildung zu einer wesentlichen Lebensdauerverbesserung, da Defekte und Mikrorisse durch zu hohe Dehnung in der Elastomermatrix vermieden werden. Eine zu hohe Aufweitung des schlauchförmigen Gestricks oder Geflechts bei Druckspitzen wird durch die Verwendung der Wickellagen der Textillage verhindert.

Das Gestrick hat den Vorteil, durch Auswahl der entsprechenden Strickmuster, Maschengeometrien, Gamwerkstoffe, Gamfeinheiten und geeigneten Strickköpfe die

Herstellung von komplexen Schlauchgeometrien bei im Vergleich zu einem Geflecht weniger hoher dynamischer Festigkeit zu ermöglichen.

Das Geflecht hat den Vorteil, durch Auswahl der entsprechenden Gamwerkstoffe, Garnfeinheiten, Fadenzahlen und optimalem Flechtwinkel die Herstellung von dynamisch hoch belastbaren Schläuchen bei im Vergleich zu einem Gestrick weniger komplexen Schlauchgeometrien zu ermöglichen.

Ein Gestrick als textiler Festigkeitsträger ist aus einem oder mehreren Fäden bzw. Fadensystemen durch Fadenumschlingung hergestellt. Die Fäden verlaufen dabei in Querrichtung. Das Gestrick hat eine ausreichende Festigkeit bei noch vorhandener Flexibilität. Eine Textileinlage aus Gewebe wäre aufgrund der höheren Fadendichte zwar druckfest, aber wesentlich zu steif.

Die schlauchförmige textile Festigkeitsträgereinlage kann auch als offenes Geflecht ausgebildet sein, was den direkten Kontakt zwischen gummierter Wickellage und elastomerer Innenschicht erleichtert.

Weitere vorteilhafte Ausgestaltungen der Erfindung werden in den Unteransprüchen gekennzeichnet.

In vorteilhafter Weise ist die aufgewickelte Textileinlage ein Flachgestrick. Aufgrund des speziellen Fadenverlaufs des Flachgestricks ist dieses in allen Richtungen flexibler und lässt sich gut drapieren.

In weiterer vorteilhafter Weise ist die aufgewickelte Textillage ein Flachgewirke.

In weiterer vorteilhafter Weise ist die aufgewickelte Textillage ein flexibles Flachgewebe. Dieses ist in einer Richtung dehnbar. Quer- und Längsfäden können sich in ihren Kreuzungspunkten gegeneinander verschieben.

Ist die aufgewickelte Textillage auf Stoß gewickelt, wird eine gleichmäßige Wandstärke des Schlauches erreicht.

Ist die aufgewickelte Textillage überlappend gewickelt, wird die Nahtfestigkeit des Schlauchverbundes verbessert.

In weiterer Ausführung der Erfindung ist die aufgewickelte Textillage mehrfach um das schlauchförmige Gestrick oder Geflecht umfangsmäßig verlaufend gewickelt, was eine deutliche Erhöhung der Druckfestigkeit des Schlauches zur Folge hat.

In weiterer Ausführung der Erfindung ist die aufgewickelte Textillage unter einem definierten Winkel spiralisiert um das schlauchförmige Gestrick oder Geflecht gewickelt. Dadurch ist eine halbkontinuierliche Herstellungsweise möglich.

Eine weitere Ausführungsform der Erfindung sieht vor, dass eine Wickellage eines zweiten Flachgestricks um die Wickellage des ersten Flachgestricks aufgebracht ist, wobei das zweite Flachgestrick mindestens außen gummiert ist. Diese zusätzliche Lage minimiert die Aufdehnung und verteilt die Druckbelastung auf drei Lagen (eine Lage Schlauchgestrick oder Schlauchgeflecht und zwei Lagen Flachgestrick). Eine einseitige Gummierung ist vorteilhafter für die Gesamtwanddicke, da an der Überlappungsstelle weniger Wanddicken-Versatz auftritt.

In vorteilhafter Ausgestaltung der Erfindung ist auf die außenliegende gewickelte textile Festigkeitsträgereinlage eine elastomere Außenschicht aus elastomerem Werkstoff aufgebracht.

Der nach der Erfindung aufgebaute Schlauch ist sowohl für die heiße als auch für die kalte Seite eines Turboladers geeignet.

Anhand der Zeichnung werden nachstehend drei Ausführungsbeispiele näher erläutert.

Es zeigt
- Fig. 1: schematisch einen aufgebauten bzw. konfektionierten Ladeluftschlauch mit einer textilen Festigkeitsträgereinlage aus einem schlauchförmigem Gestrick (Schlauchgestrick) und einer weiteren Textileinlage aus einem gewickelten gummierten Flachgestrick in abgestuft aufgeschnittener Seitenansicht;
- Fig. 2: einen Schlauchaufbau wie in Fig. 1 für einen Ladeluftschlauch für die kalte Seite, bei dem die innere Gummilage einlagig ist;
- Fig. 3: einen Schlauchaufbau wie in Fig. 1 mit einer weiteren äußeren, aber einseitig gummierten Wickellage aus Flachgestrick und einer aufgebrachten Außengummischicht;
- Fig. 4: einen vulkanisierten gekrümmten Ladeluftschlauch, bei dem zur Übersichtlichkeit ein Teil der Flachgestricklage von dem Schlauchgestrick abgeklappt gezeichnet ist unter Fortlassung der Gummibeschichtung des Flachgestricks in einem kleinen Teilbereich.

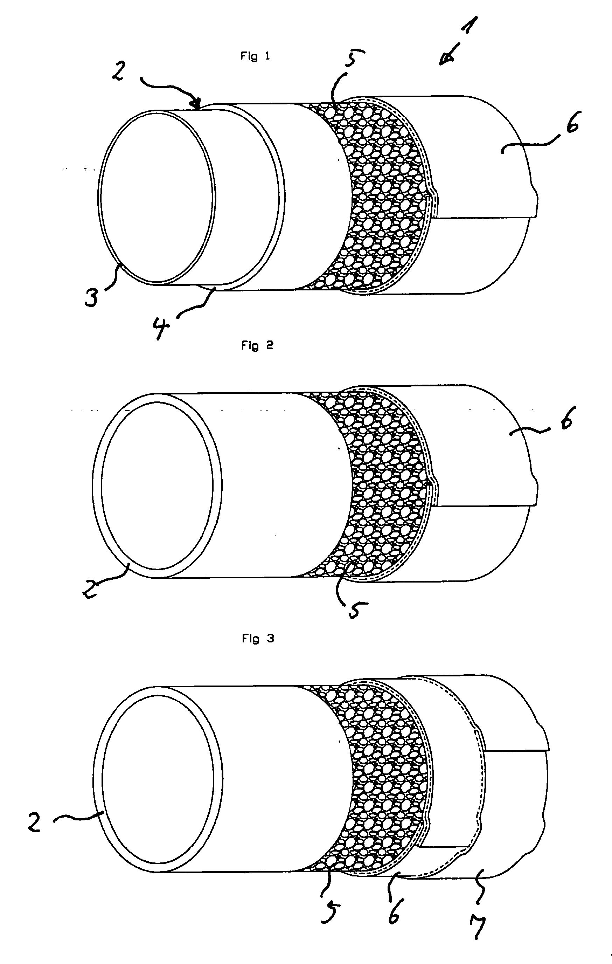

Der in Fig. 1 gezeigte Ladeluftschlauch 1 weist eine aus elastomerem Werkstoff extrudierte zweilagige Innenschicht 2 auf, die aus einer Sperrschicht 3 aus FPM (Fluorkautschuk) und einer Zwischenschicht 4 aus VMQ (Silikonkautschuk) besteht. Auf dieser Innenschicht 2 ist ein schlauchförmiges Rundgestrick 5 aufgebracht, dessen Fäden aus m-Aramid sind. Um dieses Rundgestrick 5 ist eine Wickellage 6 aus beidseitig gummiertem Flachgestrick aus m-Aramid zweifach und überlappend gewickelt. Die Gummierung des Flachgestricks 6 wird üblicherweise vorher in einem Kalandrierprozess durchgeführt.

Dieser Schlauchrohling wird nach seinem Aufbau (Konfektion) auf einem entsprechend der gewünschten Krümmergeometrie ausgebildeten Dom in einem Autoklaven ausvulkanisiert.

Der Schlauchaufbau gemäß Fig. 2 unterscheidet sich von dem Schlauchaufbau der Fig. 1 dadurch, dass die extrudierte elastomere Innenschicht 2 lediglich einlagig ist. Der elastomere Werkstoff der Innenschicht 2 ist ein Kautschukwerkstoff AEM (Ethylen-Acrylat-Kautschuk). Der Werkstoff des Rundgestricks 5 ist aus einem p-Aramid. Die Wickellage 6 besteht aus einem Flachgestrick, das beidseitig gummiert ist und ebenfalls aus dem Werkstoffp-Aramid besteht. Die Gummierung des Flachgestricks 6 besteht aus dem Kautschukwerkstoff AEM oder ACM (Acrylat-Kautschuk).

In der Fig. 3 wird ein modifizierter Schlauchaufbau dargestellt, der zusätzlich zu der extrudierten Innenschicht 2 und des schlauchförmigen Rundgestricks 5 und der beidseitig gummierten Wickellage 6 aus Flachgestrick eine weitere zweite Wickellage 7 aus Flachgestrick aufweist, die nur einseitig außen gummiert ist.

Um diese zweite Wickellage 7 kann eine elastomere Außenschicht aus elastomerem Werkstoff AEM oder ACM aufgebracht werden.

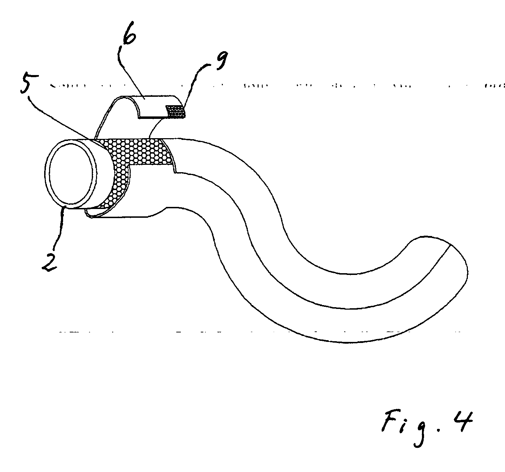

In Fig. 4 ist der Ladeluftschlauch gemäß Fig. 2 als ein vulkanisierter Schlauchkrümmer dargestellt. Dieser weist eine extrudierte Innenschicht 2 auf, auf der umfangsmäßig das schlauchförmige Gestrick 5 aufgebracht ist. Um diesen Aufbau ist das Flachgestrick 6 überlappend mit einer Wickellage gelegt, wobei das Flachgestrick 6 beidseitig mit einer Elastomerschicht belegt ist. Im Teilbereich 9 ist die obere Elastomerschicht weggebrochen dargestellt, um ein Teil des gummierten Flachgestricks 6 zu zeigen.

Je nach Anwendungszweck kann es möglich sein, das Flachgestrick 6 entweder überlappend oder auf Stoß zu legen. Bei speziellen Anwendungen ist es auch möglich, das Flachgestrick 6 in einer geringeren Breite herzustellen und spiralisiert um den mit dem Schlauchgestrick oder Schlauchgeflecht 5 versehenen Schlauchaufbau jeweils an den Seitenkanten überlappend auszubilden.

## Patentansprüche

1. Schlauch (1), insbesondere Ladeluftschlauch oder Kühlwasserschlauch, mit mindestens zwei textilen Festigkeitsträgereinlage (5, 6, 7) und einer Innenschicht (2) aus elastomerem Werkstoff,
**dadurch gekennzeichnet,**
**dass** auf der elastomeren Innenschicht (2) eine textile Festigkeitsträgereinlage (5) aus einem umfangsmäßig geschlossenen, schlauchförmigen Gestrick oder Geflecht aufgebracht ist,
**dass** auf dem schlauchförmigen Gestrick oder Geflecht (5) als weitere textile Festigkeitsträgereinlage eine beidseitig gummierte Textillage (6) aufgewickelt ist.

2. Schlauch (1), insbesondere Ladeluftschlauch, nach Anspruch 1, **dadurch gekennzeichnet, dass** die aufgewickelte Textillage (6) ein Flachgestrick ist.

3. Schlauch (1), insbesondere Ladeluftschlauch, nach Anspruch 1, **dadurch gekennzeichnet, dass** die aufgewickelte Textillage (6) ein Flachgewirke ist.

4. Schlauch (1), insbesondere Ladeluftschlauch, nach Anspruch 1, **dadurch gekennzeichnet, dass** die aufgewickelte Textillage (6) ein flexibles Flachgewebe ist.

5. Schlauch (1), insbesondere Ladeluftschlauch, nach Anspruch 1, **dadurch gekennzeichnet, dass** die aufgewickelte Textillage (6) auf Stoß gewickelt ist.

6. Schlauch (1), insbesondere Ladeluftschlauch, nach Anspruch 1, **dadurch gekennzeichnet, dass** die aufgewickelte Textillage (6) überlappend gewickelt ist.

7. Schlauch (1), insbesondere Ladeluftschlauch, nach Anspruch 1, **dadurch gekennzeichnet, dass** die aufgewickelte Textillage (6) mehrfach um das schlauchförmige Gestrick oder Geflecht(5) umfangsmäßig verlaufend gewickelt ist.

8. Schlauch (1), insbesondere Ladeluftschlauch, nach Anspruch 1, **dadurch gekennzeichnet, dass** die aufgewickelte Textillage (6) unter einem definierten Winkel spiralisiert um das schlauchförmige Gestrick oder Geflecht (5) gewickelt ist.

9. Schlauch (1), insbesondere Ladeluftschlauch, nach Anspruch 2, **dadurch gekennzeichnet, dass** eine Wickellage eines zweiten Flachgestricks (7) um die Wickellage des ersten Flachgestricks (6) aufgebracht ist, wobei das zweite Flachgestrick (7) mindestens außen gummiert ist.

10. Schlauch (1), insbesondere Ladeluftschlauch, nach einem der Ansprüche 1 bis 9, **dadurch gekennzeichnet,**
**dass** auf die außenliegende gewickelte textile Festigkeitsträgereinlage (6 bzw. 7) eine elastomere Außenschicht aus elastomerem Werkstoff aufgebracht ist.

## Claims

1. Hose (1) , in particular charge-air hose or cooling-water hose, with at least two textile reinforcement inserts (5, 6, 7) and one inner layer (2) made of elastomeric material,
**characterized in that**
on the elastomeric inner layer (2) a textile reinforcement insert (5) has been applied, made of a circumferentially continuous, tubular drawn-loop knit or braid,
**in that** a bilaterally rubberized textile ply (6) has been wound as further textile reinforcement insert on the tubular drawn-loop knit or braid (5).

2. Hose (1), in particular charge-air hose, according to Claim 1, **characterized in that**
the wound textile ply (6) is a flat drawn-loop knit.

3. Hose (1), in particular charge-air hose, according to Claim 1, **characterized in that**
the wound textile ply (6) is a flat formed-loop knit.

4. Hose (1), in particular charge-air hose, according to Claim 1, **characterized in that**
the wound textile ply (6) is a flexible flat woven material.

5. Hose (1), in particular charge-air hose, according to Claim 1, **characterized in that**
the wound textile ply (6) has been butt-wound.

6. Hose (1), in particular charge-air hose, according to Claim 1, **characterized in that**
the wound textile ply (6) has been overlap-wound.

7. Hose (1), in particular charge-air hose, according to Claim 1, **characterized in that**
the wound textile ply (6) has been wound a plurality of times around the circumference of the tubular drawn-loop knit or braid (5).

8. Hose (1), in particular charge-air hose, according to Claim 1, **characterized in that**
the wound textile ply (6) has been wound helically around the tubular drawn-loop knit or braid (5) at a defined angle.

9. Hose (1), in particular charge-air hose, according to Claim 2, **characterized in that**
a wound ply of a second flat drawn-loop knit (7) has been applied around the wound ply of the first flat drawn-loop knit (6), where the second flat drawn-loop knit (7) has been at least externally rubberized.

10. Hose (1), in particular charge-air hose, according to any of Claims 1 to 9, **characterized in that** an elastomeric external layer made of elastomeric material has been applied to the exterior wound textile reinforcement insert (6 and, respectively, 7).

## Revendications

1. Durite (1), en particulier durite pour air de suralimentation ou durite pour eau de refroidissement, présentant au moins deux garnitures (5, 6, 7) de renfort textile et une couche intérieure (2) en matériau élastomère,
**caractérisée en ce que**
une garniture (5) de renforts textiles en tricot ou treillis en forme de manchon, fermé à sa périphérie, est appliquée sur la couche intérieure (2) en élastomère et
**en ce qu'**une couche textile (6) caoutchoutée sur ses deux faces est enroulée sur le tricot ou treillis (5) en forme de manchon, à titre d'autre garniture de renfort textile.

2. Durite (1) selon la revendication 1, **caractérisée en ce que** la couche textile (6) enroulée est un tricot plat.

3. Durite (1) selon la revendication 1, **caractérisée en ce que** la couche textile (6) enroulée est un produit maillé plat.

4. Durite (1) selon la revendication 1, **caractérisée en ce que** la couche textile (6) enroulée est un tissu textile plat.

5. Durite (1) selon la revendication 1, **caractérisée en ce que** la couche textile (6) enroulée est enroulée bout à bout.

6. Durite (1) selon la revendication 1, **caractérisée en ce que** la couche textile (6) enroulée est enroulée avec recouvrement.

7. Durite (1) selon la revendication 1, **caractérisée en ce que** la couche textile (6) enroulée est enroulée plusieurs fois autour du tricot ou treillis (5) en forme de manchon et s'étend dans la direction périphérique.

8. Durite (1) selon la revendication 1, **caractérisée en ce que** la couche textile (6) enroulée est spiralée sous un angle défini et **en ce que** le tricot ou treillis (5) en forme de manchon est enroulé.

9. Durite (1) selon la revendication 2, **caractérisé en ce qu'**une couche d'enroulement d'un deuxième tricot plat (7) est appliquée autour de la couche enroulée du premier tricot plat (6), le deuxième tricot plat (7) étant caoutchouté au moins du côté extérieur.

10. Durite (1) selon l'une des revendications 1 à 9, **caractérisé en ce qu'**une couche extérieure élastomère en matériau élastomère est appliquée sur la garniture (6 ou 7) de renforts textiles enroulée du côté extérieur.
